# EUROPÄISCHE PATENTSCHRIFT

(11) **EP 2 548 720 B1**
(45) Veröffentlichungstag und Bekanntmachung des Hinweises auf die Patenterteilung: **21.06.2017**
(21) Anmeldenummer: 11005866.6
(22) Anmeldetag: 18.07.2011
(51) Int. Cl.: B29C 70/52, B29B 11/16, B29K 101/12, B29C 43/24

(54) **Verfahren und Vorrichtung zur Herstellung thermoplastischer Prepregs**
Method and device for producing thermoplastic prepregs
Procédé et dispositif de fabrication d'une feuille pré-imprégnée thermoplastique

(43) Veröffentlichungstag der Anmeldung: 23.01.2013
(73) Patentinhaber: Cetex Institut für Textil- und Verarbeitungsmaschinen gemeinnützige GmbH, 09120 Chemnitz (DE)
(72) Erfinder: Kempt, Wolfgang, Dr.-Ing., 09224 Chemnitz OT Grüna (DE); Weise, Bernd, Dipl.-Ing., 09122 Chemnitz (DE); Friedland, Wolfgang, Dipl.-Ing., 09557 Flöha (DE); Nendel, Wolfgang, Dr.-Ing., 09569 Oederan OT Schönerstadt (DE); Helbig, Frank, Dr.-Ing., 04618 Göpfersdorf OT Garbisdorf (DE); Heinrich, Hans, Dipl.-Ing., 09247 Chemnitz OT Röhrsdorf (DE)
(74) Vertreter: Steiniger, Carmen

(56) Entgegenhaltungen:
- US-A- 4 471 018
- US-A- 5 073 413
- US-A1- 2005 189 673

## Beschreibung

Die Erfindung betrifft Verfahren und eine Vorrichtung zur Herstellung thermoplastischer Prepregs.

Thermoplastische Prepregs sind Kunststoff-Verstärkungsfaser-Verbundsysteme, die als Halbzeuge mit hohem mechanischen Eigenschaftspotential für Strukturleichtbauelemente speziell im Automobilbau und in der Luftfahrtindustrie Anwendung finden. Voraussetzung ist ein hoher Durchdringungsgrad (hohe Imprägnierqualität) des Polymers im Verstärkungsfasersystem und damit eine hohe Haftfestigkeit zwischen Polymer und Filamenten.

Kunststoff-Faserverbundsysteme werden gegenwärtig nach verschiedenen Verfahrenstechnologien hergestellt, die unterschiedliche Imprägnierqualitäten liefern. Die einfachste Form der Herstellung dieser Verbundsysteme ist das Kaschieren (auch als Laminieren bzw. Beschichten bezeichnet) in einem Kalander.

Mit dieser Technologie wird jedoch nur ein eingeschränkter Durchdringungsgrad des Polymers im Faserverbundsystem erreicht, was aber für die auf Kalandern hergestellten Verbunde für die Fertigung von z. B. Transportriemen, Gummibooten, Planen, Kunstleder, Tischdecken oder Bodenbelägen etc. ausreichend ist. Die für den Hochleistungseinsatz im Strukturleichtbau erforderlichen Imprägnierqualitäten als Grundlage für eine hohe Haftfestigkeit des Polymers am Filament können auf Grund der verfahrenstechnischen Restriktionen (Verweilzeit, Temperaturführung, Kaschierdruck) nicht realisiert werden.

Diesem Nachteil versucht die Lösung gemäß der Patentschrift EP 672 780 B1, die ein Verfahren und eine Vorrichtung zum Kalandrieren von Geweben mit Kunststoffbeschichtungsmaterial beschreibt, dadurch zu begegnen, dass vor dem Beschichtungsprozess ein Weiten der Maschen des Gewebes durch eine Streckung in Längs- und Querrichtung erfolgt, wodurch eine bessere Durchdringung der Polymerschmelze erzielt werden kann. Die mit diesem Verfahren erreichbaren Imprägnierqualitäten erfüllen jedoch ebenfalls nicht die o. g. Anforderungen für Hochleistungsanwendungen, da die für die vollständige Imprägierung (Durchdringung) erforderliche Verweilzeit des Kunststoff-Verstärkungsfaser-Verbundsystems in der Verfahrenszone (nur eine halbe Walzenumschlingung) zu gering ist und die notwendigen niedrigen Schmelzeviskositäten auf Grund des gleichzeitig zum Imprägnierprozess ablaufenden Formbildungsprozesses aus der Spaltvorlage vor dem Schmelz- und Beschichtungszylindern verfahrenstechnisch nicht realisierbar sind;

Gegenwärtig werden thermoplastische Prepregs für technische Anwendungen mit hohem Anspruchsniveau in einem mehrstufigen Prozess hergestellt, der aus folgenden Prozessstufen besteht:
1. Compoundierung und Modifizierung des thermoplastischen Trägerpolymers entsprechend den erforderlichen Anwendungseigenschaften.
2. Herstellung von Folien aus Trägerpolymer
3. Kaschierprozess in einer Doppelbandpresse mit den Verfahrensstufen
   - Aufschmelzen der Folien
   - Fixierung der Verstärkungsfaserstruktur zwischen 2 Folien
   - Kaschierung und Kalibrierung in Doppelbandpresse

Dieser mehrstufige Prozess ist kostenintensiv durch
- hohen Gesamtinvestaufwand
- hohen Energieaufwand durch mehrmaliges Aufschmelzen des Trägerpolymers
- hohe Gesamtbetriebskosten für Personal; Material; Transportkosten, da die einzelnen Prozessstufen an verschiedenen Orten durch unterschiedliche Produzenten durchgeführt werden.

Des Weiteren besteht eine geringe Prozessvariabilität zur Steuerung der Imprägnierqualität durch lange Prozessketten und eingeschränkte Anzahl von stellbaren signifikanten Prozessparametern.

Eine Möglichkeit für diese Technologie wird durch die EP1 923 420 A1 repräsentiert.

Das Dokument US 2005 0189673 A1 offenbart den Oberbegriff der Ansprüche 1 und 9.

Der Erfindung liegt deshalb die Aufgabe zugrunde, bei der Herstellung von thermoplastischen Prepregs eine Verbesserung der Imprägnierqualitäten und eine höhere Prozessvariabilität zur Steuerung der Qualitätsanforderungen zu ermöglichen.

Diese Aufgabe wird durch ein Verfahren gemäß dem kennzeichnenden Teil des Patentanspruches 1 gelöst. Weitere vorteilhafte Merkmale enthalten die Ansprüche 2 bis 8. Eine Vorrichtung zur Durchführung des erfindungsgemäßen Verfahrens wird durch den kennzeichnenden Teil des Patentanspruches 9 angegeben. Die Vorrichtung wird durch die Patentansprüche 10 bis 15 weiter ausgestaltet.

Eine Reduktion der Prozessstufen wird durch Direktverarbeitung des aufzubringenden Kunststoffes, d. h. Realisierung der gesamten Prozesskette in einem komplexen Verarbeitungssystem durch Einsparung der Prozessstufe Folienherstellung, erreicht.

Das Verarbeitungssystem vereint damit in sich die Verfahrensstufen
- Compoundierung / Modifizierung des Trägerpolymers, d.h.
   ◆ Dosierung der Ausgangskomponenten der Trägerpolymerrezeptur
   ◆ Plastizierung, Homogenisierung und Entgasung der Ausgangskomponenten
   ◆ Druckaufbau der Trägerpolymerschmelze.
- Vorlage und Vorwärmung der Verstärkungsfaserstruktur
- Imprägnierung der Verstärkungsfaserstruktur.

Die Imprägnierung erfolgt in zwei unabhängig voneinander steuerbaren Verfahrensstufen (Imprägnierwerkzeug, Imprägnierkalander) als Grundlage für die gezielte Einstellung der Imprägnierqualität in Abhängigkeit von den Eigenschaften der Inputmaterialien (Trägerpolymer, Verstärkungsfaserstruktur).

Die Mehrstufen-Imprägnierung (Imprägnierwerkzeug / Imprägnierkalander) ist die Grundlage für hohe Durchdringungsgrade der Polymerschmelze im Fasersystem. Die Prozessführung im Werkzeug erfolgt unter Vakuum. Damit werden durch die Verstärkungsfaserstruktur eingebrachte und die Anbindung des Polymers an die Filamentoberfläche negativ beeinflussende gasförmige Einschlüsse eliminiert.

Eine hohe Prozessvariabilität und damit Anpassbarkeit an die Prozesserfordernisse und Qualitätsanforderungen wird durch folgende beeinflussbare Prozessparameter gewährleistet
- Viskosität η des Polymers;
- Schmelzetemperatur des Polymers
- Vorwärmtemperatur der Verstärkungsfaserstruktur
- Vakuum im Imprägnierwerkzeug
- Strahlertemperatur im Bereich der mittleren Walze des Imprägnierkalanders
- Walzentemperaturen des Imprägnierkalanders
- Walzendrehzahlen des Imprägnierkalanders
- Friktionen in den Walzenspalten
- Warenbahngeschwindigkeit.

Nachfolgend wird die Erfindung anhand eines Ausführungsbeispieles näher beschrieben. Die zugehörigen Zeichnungen zeigen in
- Fig. 1: ein Verfahrensschema für die gleichzeitige Imprägnierung der beiden Seiten einer Verstärkungsfaserstruktur mit einem Polymer,
- Fig. 2: ein Verfahrensschema für die gleichzeitige Imprägnierung der beiden Seiten einer Verstärkungsfaserstruktur mit zwei verschiedenen Polymeren und in
- Fig. 3: ein Verfahrensschema für die nacheinander erfolgende Imprägnierung der beiden Seiten einer Verstärkungsfaserstruktur mit zwei verschiedenen Polymeren.

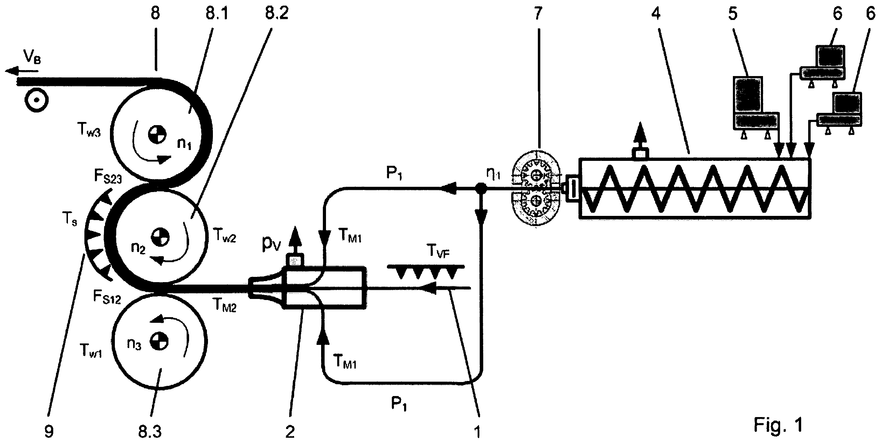

Anhand des Verfahrensschemas in Fig. 1, das das erfindungsgemäße Verfahren darstellt, sollen der grundsätzliche Ablauf des Verfahrens sowie die zugehörige, zu dessen Ausführung bestimmte Vorrichtung näher beschrieben werden.

Dem Prozess wird eine Verstärkungsfaserstruktur 1 mit der Bahngeschwindigkeit v_{B} zugeführt. Als solche kommen verschiedenste textile Strukturen wie Faden- oder Fasergelege, Gewebe, Gewirke, Vliese o. ä. in Betracht, die geeignet sind, dem fertigen Produkt höhere Festigkeitseigenschaften zu verleihen. Die Verstärkungsfaserstruktur 1 wird vor Eintritt in ein Imprägnierwerkzeug 2 beim Passieren einer Vorwärmeinrichtung 3 einer Vorwärmung auf eine variabel einstellbare Temperatur T_{VF} unterzogen.

Dem Imprägnierwerkzeug 2 im Prozessablauf vorgeordnet sind Mittel zur Compoundierung bzw. Modifizierung eines Polymers P₁ mit der Viskosität η₁. Diese Mittel bestehen aus einem Extruder 4, dem wiederum eine Dosierungsstation 5 für ein Trägerpolymer und sowie entsprechend den jeweiligen Erfordernissen in Dosierungsstationen 6 für ein oder mehrere Additive zugeordnet sind (in den Fig. sind beispielhaft jeweils zwei derartige Dosierungsstationen 6 dargestellt). Die Dosierung der Ausgangskomponenten (Polymer, Additive) erfolgt vorzugsweise gravimetrisch, entweder in die Einfüllöffnung (bei Einschneckenextrudern) oder in die Einfüllöffnung und stromabwärts in Zusatzöffnungen (bevorzugt von der Seite) bei Doppelschneckenextrudern. Der Extruder kann je nach Erfordernis ein Gleichlauf-Doppelschneckenextruder oder ein Einschneckenextruder sein. Bei einfachen Modifizierungen wie z. B. Einfärben kann ein Einschneckenextruder angewendet werden. Bei anspruchsvollen Aufgaben mit der Zielstellung, ein Compound aus dem Polymer und mehreren Additiven (Farbe, Stabilisatoren, Verarbeitungshilfen, Füll- und Verstärkungsmaterialien u. a.) herzustellen, wird ein gleichläufiger Doppelschneckenextruder auf Grund seiner hervorragenden Misch-, Homogenisier- und Entgasungswirkung eingesetzt.

Das den Extruder 4 mit der Schmelzetemperatur T_{M1} verlassende Polymer P₁ wird durch eine Schmelzepumpe 7 dem Imprägnierwerkzeug 2 zugeführt. Die Schmelzepumpe 7 erzeugt den für die Überwindung der Strömungswiderstände im Schmelzeverteiler und Imprägnierwerkzeug 2 erforderlichen Schmelzedruck. Im Imprägnierwerkzeug 2 erfolgt der gleichmäßige Auftrag des Polymers P₁ auf die beiden Oberflächen der bahnförmigen Verstärkungsfaserstruktur 1. Die fließtechnische Gestaltung des Imprägnierwerkzeuges 2 gewährleistet ein gleichmäßiges druckkonstantes Strömen der Schmelze ober- und unterhalb sowie über die Breite der Verstärkungsfaserstruktur 1 und führt zur Durchdringung bis zum Filament.

Eine für die Imprägnierqualität wichtige Prozessgröße ist die Schmelzetemperatur T_{M1}. Die Viskosität η₁ der Polymerschmelze P₁ kann auf das für die Imprägnierung notwendige Maß durch die Temperatur T_{M1} eingestellt werden. Die Schmelzetemperatur T_{M1} wird durch das Temperaturregime und die Schneckendrehzahl des Extruders 4 bestimmt.

Das vakuumdicht ausgeführte Imprägnierwerkzeug 2 steht erfindungsgemäß unter einem Vakuum pᵥ, welches durch eine nicht dargestellte Vakuumentgasungsanlage erzeugt wird. Damit wird die mit dem Eintrag der Verstärkungsfaserstruktur 1 eingeschleppte Luft aus dem Prozessraum entfernt und die Ausbildung von Haftungskräften in der Grenzschicht zwischen Polymer P₁ und Filament ermöglicht. Durch die Wahl des Temperaturregimes des Imprägnierwerkzeuges 2 und des Vakuums pv werden die für die jeweilige Imprägnieraufgabe optimalen Einstellungen erreicht.

Nach der Fixierung der Verstärkungsfaserstruktur 1 im Imprägnierwerkzeug 2 erfolgt die Imprägnierung durch die Polymerschmelze. Das vorimprägnierte Produkt verlässt mit der Temperatur T_{M2} das Imprägnierwerkzeug und wird einem Imprägnierkalander 8 übergeben, in dem der Imprägnierprozess fortgesetzt wird. Der Imprägnierkalander 8 ist als Drei-Walzen-Kalander mit den Kalanderwalzen 8.1, 8.2 und 8.3 ausgebildet. Die Kalanderwalzen 8.1, 8.2 und 8.3 stehen miteinander in Eingriff und werden mit den Drehzahlen n₁, n₂ bzw. n₃ angetrieben.

Nach Passage des Walzenspaltes zwischen den Kalanderwalzen 8.1 und 8.2 wird die mit dem Polymer P₁ beschichtete Verstärkungsfaserstruktur 1 durch den Strahler 9 einer erneuten Temperaturerhöhung ausgesetzt, um der Verstärkungsfaserstruktur 1 die für den Durchlauf durch den Walzenspalt zwischen den Kalanderwalzen 8.2 und 8.3 optimale Temperatur zu erteilen. Damit wird für das Polymer P1 die Verweilzeit für die Durchdringung der Verstärkungsfaserstruktur 1 verlängert und folglich die Wirkung des Walzenspaltes zwischen den Kalanderwalzen 8.2 und 8.3 auf den Imprägnierprozess erhöht.

Der Imprägnierprozess wird durch das Temperaturregime des Imprägnierkalanders 8 mit den Walzentemperaturen T_{w1}, T_{w2}, T_{w3}, die Walzenspaltkräfte F_{S12}, F_{S23}, die Walzenfriktionen n₁/n₂ sowie n₂/n₃ und die Strahlertemperatur T_{S} gesteuert. Spezielle Walzenbeschichtungen verhindern ein Verkleben des Polymers P₁ auf den Walzenoberflächen. Durch die Wahl der Temperaturen wird die Viskosität η₁ des Polymers P₁ niedrig gehalten und damit die weitere Durchdringung der Filamente erreicht. Dieser Vorgang wird durch hohe Walzenspaltkräfte und geeignete Wahl der Walzenfriktionen unterstützt.

Danach erfolgt der abschließende Durchlauf zwischen den Kalanderwalzen 8.2 und 8.3

Nach dem Abschluss des Imprägnierprozesses wird das entstandene thermoplastische Prepreg einer nicht dargestellten Kalandernachfolgeeinrichtung zugeführt, die aus Kühl-, Abzugs-, Schneid-, Wickel- bzw. Ablageeinrichtungen besteht.

Das im Verfahrensschema gemäß Fig. 1 dargestellte komplexe Verarbeitungssystem besteht folglich aus den Verfahrensstufen Compoundierung bzw. Modifizierung des Trägerpolymers, Vorlage und Vorwärmung der Verstärkungsfaserstruktur 1, Imprägnierung der Verstärkungsfaserstruktur 1 mit dem Polymer P₁ im Imprägnierwerkzeug 2 und Nachimprägnierung im Imprägnierkalander 8.

Das in Fig. 1 dargestellte System wird angewendet, wenn das Trägerpolymer für die beidseitige Imprägnierung der Verstärkungsfaserstruktur 1 aus der gleichen Rezeptur besteht.

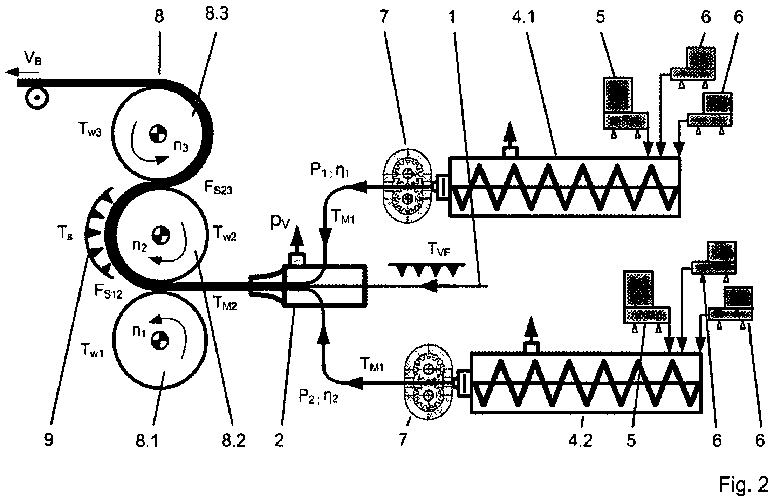

Eine Erweiterung um eine zweite Verfahrensstufe Compoundierung bzw. Modifizierung des Trägerpolymers ist in Fig. 2 dargestellt. Dieses Verarbeitungssystem wird angewendet, wenn die für das herzustellende Prepreg verwendete Verstärkungsfaserstruktur 1 aus einem Verbundsystem unterschiedlichen textilen Aufbaus besteht und bezüglich der Rezeptur und der rheologischen Eigenschaften verschiedene Trägerpolymere angewendet werden.

Die beiden Trägerpolymere werden getrennt in zwei Extrudern 4.1 und 4.2 compoundiert bzw. modifiziert und die Polymere P₁ und P₂ mit den unterschiedlichen Viskositäten η₁ und η₂ in zwei Schmelzeströmen dem Imprägnierwerkzeug 2 zugeführt.

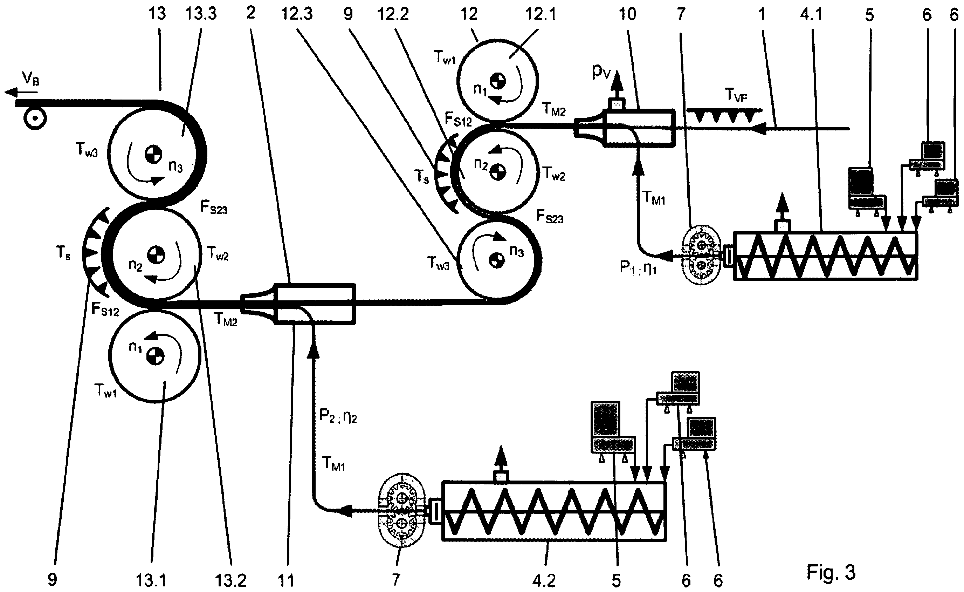

Werden Trägerpolymere mit sehr unterschiedlichen Imprägnierwirkungen (auf Grund voneinander sehr differierender rheologischer Eigenschaften) eingesetzt, kommt ein Verfahrensschema nach Fig. 3 zum Einsatz. Im Unterschied zu der Variante nach Fig. 2 werden hier nicht nur zwei verschiedene Extruder 4.1 und 4.2 eingesetzt, sondern auch zwei Imprägnierwerkzeuge 10 und 11 und zwei Imprägnierkalander 12 und 13, jeweils mit den zusammenwirkenden Kalanderwalzen 12.1; 12.2; 12.2 bzw. 13.1; 13.2; 13.3.

In einem ersten Verfahrensschritt wird zunächst im Extruder 4.1 ein modifiziertes Polymer P₁ mit einer Viskosität η₁ erzeugt und dem Imprägnierwerkzeug 10 zugeführt. Es ist vorzugsweise aus dem Trägerpolymer mit der schlechteren Durchdringungsfähigkeit hervorgegangen. Aus diesem Grunde wird nach einer ersten Imprägnierung die Verstärkungsfaserstruktur 1 einer nochmaligen Imprägnierung in einer zweiten Verfahrensstufe mit dem Extruder 4.2, dem Imprägnierwerkzeug 12 und dem Imprägnierkalander 13 unterworfen. Das Polymer P₂ ist dabei aus dem Trägerpolymer mit der besseren Imprägnierfähigkeit erzeugt worden.

### Aufstellung der verwendeten Bezugszeichen

- 1: Verstärkungsfaserstruktur
- 2: Imprägnierwerkzeug
- 3: Vorwärmeinrichtung
- 4: Extruder
- 4.1: Extruder
- 4.2: Extruder
- 5: Dosierungsstation
- 6: Dosierungsstation
- 7: Schmelzepumpe
- 8: Imprägnierkalander
- 8.1: Kalanderwalze
- 8.2: Kalanderwalze
- 8.3: Kalanderwalze
- 9: Strahler
- 10: Imprägnierwerkzeug
- 11: Imprägnierwerkzeug
- 12: Imprägnierkalander
- 12.1: Kalanderwalze
- 12.2: Kalanderwalze
- 12.3: Kalanderwalze
- 13: Imprägnierkalander
- 13.1: Kalanderwalze
- 13.2: Kalanderwalze
- 13.3: Kalanderwalze
- F_{S12}: Walzenspaltkraft
- F_{S23}: Walzenspaltkraft
- n₁: Walzendrehzahl
- n₂: Walzendrehzahl
- n₃: Walzendrehzahl
- n₁/n₂: Walzenfriktion
- n₂/n₃: Walzenfriktion
- P₁: Polymer
- P₂: Polymer
- pᵥ: Vakuum
- T_{M1}: Schmelzetemperatur des Polymers
- T_{M2}: Schmelzetemperatur des Polymers
- T_{S}: Strahlertemperatur
- T_{VF}: Vorwärmtemperatur der Verstärkungsfaserstruktur
- T_{w1}: Walzentemperatur
- T_{w2}: Walzentemperatur
- T_{w3}: Walzentemperatur
- v_{B}: Bahngeschwindigkeit
- η₁: Viskosität
- η₂: Viskosität

## Patentansprüche

1. Verfahren zur Herstellung eines thermoplastischen Prepregs, bei dem auf eine Verstärkungsfaserstruktur (1) mindestens eine Schicht aus einem geschmolzenen Kunststoff (P₁; P₂) aufgebracht und mittels Kalandrieren verfestigt wird, wobei der Kunststoff (P₁; P₂) in mindestens einem Imprägniervorgang die Verstärkungsfaserstruktur (1) durchdringt, wobei auf die auf Prozesstemperatur vorgewärmte Verstärkungsfaserstruktur (1) in einem Imprägnierwerkzeug (2, 10, 11) zumindest einseitig der compoundierte, geschmolzene Kunststoff (P₁; P₂) unter Vakuum (pᵥ) flächig aufgetragen wird,
**dadurch gekennzeichnet,**
**dass** das vorimprägnierte Produkt das Imprägnierwerkzeug (2, 10, 11) verlässt und einem Imprägnierkalander (8, 12, 13) übergeben wird, der drei miteinander in Eingriff stehende Kalanderwalzen (8.1, 8.2, 8.3; 12.1, 12.2, 12.3; 13.1, 13.2, 13.3) aufweist und in dem der Imprägnierprozess fortgesetzt wird.

2. Verfahren nach Anspruch 1, **dadurch gekennzeichnet, dass** Walzentemperaturen (T_{W1}, T_{W2}, T_{W3}) des Imprägnierkalanders (8, 12, 13) als Prozessparameter beeinflusst werden.

3. Verfahren nach Anspruch 1 oder 2, **dadurch gekennzeichnet, dass** Walzendrehzahlen (n₁, n₂, n₃) des Imprägnierkalanders (8, 12, 13) als Prozessparameter beeinflusst werden.

4. Verfahren nach wenigstens einem der vorhergehenden Ansprüche, **dadurch gekennzeichnet, dass** nach Passage eines Walzenspaltes zwischen den Kalanderwalzen (8.1, 8.2; 12.1, 12.2; 13.1, 13.2) die mit dem Kunststoff (P₁; P₂) beschichtete Verstärkungsfaserstruktur (1) durch einen Strahler (9) einer erneuten Temperaturerhöhung ausgesetzt wird.

5. Verfahren nach wenigstens einem der vorhergehenden Ansprüche, **dadurch gekennzeichnet, dass** auf die Verstärkungsfaserstruktur (1) in einem Schritt auf beide Seiten eine Schicht aus dem gleichen Kunststoff (P₁) aufgetragen wird.

6. Verfahren nach wenigstens einem der Ansprüche 1 bis 4, **dadurch gekennzeichnet, dass** auf die Verstärkungsfaserstruktur (1) in einem Schritt auf beide Seiten jeweils eine Schicht aus unterschiedlichen Kunststoffen (P₁; P₂) aufgetragen wird.

7. Verfahren nach wenigstens einem der Ansprüche 1 bis 4, **dadurch gekennzeichnet, dass** nacheinander zunächst auf eine Seite und danach auf die andere Seite der Verstärkungsfaserstruktur (1) jeweils eine Schicht aus Kunststoff (P₁; P₂) aufgetragen und unmittelbar danach imprägniert wird.

8. Verfahren nach Anspruch 7, **dadurch gekennzeichnet, dass** auf die beiden Seiten der Verstärkungsfaserstruktur (1) Schichten aus unterschiedlichen Kunststoffen (P₁; P₂) aufgetragen werden.

9. Vorrichtung zur Herstellung eines thermoplastischen Prepregs durch ein Verfahren nach Anspruch 1, mit einer Heizeinrichtung zum Vorwärmen einer Verstärkungsfaserstruktur (1), mindestens einer Compoundiereinrichtung zum Modifizieren und Aufschmelzen eines Kunststoffes (P₁; P₂) sowie einer Kalandereinrichtung, wobei zwischen einer Compoundiereinrichtung (5; 6) für den Kunststoff (P₁; P₂) und der Kalandereinrichtung ein unter Vakuum (pᵥ) stehendes Imprägnierwerkzeug (2; 10; 11) angeordnet ist, welches mit Mitteln zum flächigen Transport der Verstärkungsfaserstruktur (1) durch das Imprägnierwerkzeug (2; 10; 11) sowie mit Mitteln zum Auftragen des aufgeschmolzenen Kunststoffes (P₁; P₂) auf die Verstärkungsfaserstruktur (1) ausgestattet ist,
**dadurch gekennzeichnet,**
**dass** die Kalandereinrichtung ein Imprägnierkalander (8, 12, 13) ist, der drei miteinander in Eingriff stehende Kalanderwalzen (8.1, 8.2, 8.3; 12.1, 12.2, 12.3; 13.1, 13.2, 13.3) aufweist und in dem der Imprägnierprozess fortgesetzt wird.

10. Vorrichtung nach Anspruch 9, **dadurch gekennzeichnet, dass** Walzentemperaturen (T_{W1}, T_{W2}, T_{W3}) des Imprägnierkalanders (8, 12, 13) beeinflussbar sind.

11. Vorrichtung nach Anspruch 9 oder 10, **dadurch gekennzeichnet, dass** Walzendrehzahlen (n₁, n₂, n₃) des Imprägnierkalanders (8, 12, 13) beeinflussbar sind.

12. Vorrichtung nach wenigstens einem der Ansprüche 9 bis 11, **dadurch gekennzeichnet, dass** im Bereich einer mittleren Kalanderwalze (8.2, 12.2, 13.2) des Imprägnierkalanders (8, 12, 13) ein Strahler (9) zur erneuten Temperaturerhöhung der mit dem Kunststoff (P₁; P₂) beschichteten Verstärkungsfaserstruktur (1) vorgesehen ist.

13. Vorrichtung nach wenigstens einem der Ansprüche 9 bis 12, **dadurch gekennzeichnet, dass** dem Imprägnierwerkzeug (2) eine der Beschichtung beider Flächen der Verstärkungsfaserstruktur (1) dienende Compoundiereinrichtung (5; 6) vorgeordnet ist.

14. Vorrichtung nach wenigstens einem der Ansprüche 9 bis 12, **dadurch gekennzeichnet, dass** dem Imprägnierwerkzeug (2) zwei der Beschichtung jeweils einer der beiden Flächen der Verstärkungsfaserstruktur (1) dienende Compoundiereinrichtungen (5; 6) vorgeordnet sind.

15. Vorrichtung nach wenigstens einem der Ansprüche 9 bis 14, **dadurch gekennzeichnet, dass** zur aufeinanderfolgenden Imprägnierung der Flächen der Verstärkungsfaserstruktur (1) nacheinander jeweils eine Bearbeitungseinheit aus einer Compoundiereinrichtung (5; 6), einem Imprägnierwerkzeug (10; 11) sowie einem Imprägnierkalander (12; 13) vorgesehen ist.

## Claims

1. Method for producing a thermoplastic prepreg whereby at least one layer of a molten plastic (P₁; P₂) is applied to a reinforcing fiber structure (1) and solidified by means of calendering, wherein the plastic (P₁; P₂) permeates the reinforcing fiber structure (1) in at least one impregnation process, wherein the compounded, molten plastic (P₁; P₂) is applied at least one-sided in laminar fashion to the reinforcing fiber structure (1) pre-heated to the process temperature in an impregnating tool (2, 10, 11) under vacuum (pᵥ),
**characterized in that**
the pre-impregnated product leaves the impregnation tool (2, 10, 11) and is delivered to an impregnation calender (8, 12, 13) which comprises three calender rolls (8.1, 8.2, 8.3; 12.1, 12.2, 12.3; 13.1, 13.2, 13.3) engaging with each other and in which the impregnation process is continued.

2. Method according to claim 1, **characterized in that** the roller temperatures (T_{W1}, T_{W2,} T_{W3}) of the impregnation calender (8, 12, 13) are influenced as process parameters.

3. Method according to claim 1 or 2, **characterized in that** the roller speeds (n₁, n₂, n₃) of the impregnation calender (8, 12, 13) are influenced as process parameters.

4. Method according to at least one of the preceding claims, **characterized in that** the reinforcing fiber structure (1) coated with the plastic (P₁; P₂) is exposed to a temperature increase once again by means of an emitter (9) after passage of a roller gap between the calender rollers (8.1, 8.2; 12.1, 12.2, 13.1, 13.2).

5. Method according to at least one of the preceding claims, **characterized in that** in one step a layer of the same plastic (P₁) is applied to both sides of the reinforcing fiber structure (1).

6. Method according to at least one of the claims 1 to 4, **characterized in that** in one step a layer of different plastics (P₁; P₂) is respectively applied to both sides of the reinforcing fiber structure (1).

7. Method according to at least one of the claims 1 to 4, **characterized in that** consecutively first to one side and afterwards the other side of the reinforcing fiber structure (1), a layer of plastic (P₁; P₂) is respectively applied and immediately afterwards impregnated.

8. Method according to claim 7, **characterized in that** layers of different plastics (P₁; P₂) are applied to both sides of the reinforcing fiber structure (1).

9. Device for producing a thermoplastic prepreg by means of a method according to claim 1 with a heating device for pre-heating a reinforcing fiber structure (1), at least one compounding device for modifying and melting a plastic (P₁; P₂) as well as a calendering device, wherein between a compounding device (5; 6) for the plastic (P₁; P₂) and the calendering device an impregnation tool (2; 10; 11) under vacuum (pᵥ) is arranged, which is equipped with means for laminar transport of the reinforcing fiber structure (1) through the impregnation tool (2; 10; 11) as well as means for applying the melted plastic (P₁; P₂) to the reinforcing fiber structure (1), **characterized in that**
the calendering device is an impregnation calender (8, 12, 13) which comprises three calender rolls (8.1, 8.2, 8.3; 12.1, 12.2, 12.3, 13.1, 13.2, 13.3) engaging with each other and in which the impregnation process is continued.

10. Device according to claim 9, **characterized in that** roller temperatures (T_{W1}, T_{W2}, T_{W3}) of the impregnation calender (8, 12, 13) are influenceable.

11. Device according to claim 9 or 10, **characterized in that** roller speeds (n₁, n₂, n₃) of the impregnation calender (8, 12, 13) are influenceable.

12. Device according to at least one of the claims 9 to 11, **characterized in that** in the area of a center calender roller (8.2, 12.2, 13.2) of the impregnation calender (8, 12, 13), an emitter (9) is provided for another temperature increase of the reinforcing fiber structure (1) coated with the plastic (P₁; P₂).

13. Device according to at least one of the claims 9 to 12, **characterized in that** a compounding device (5;6) used for coating both surfaces of the reinforcing fiber structure (1) is provided upstream of the impregnation tool (2).

14. Device according to at least one of the claims 9 to 12, **characterized in that** two compounding devices (5; 6) used for coating each one of the two surfaces of the reinforcing fiber structure (1) are provided upstream of the impregnation tool (2).

15. Device according to at least one of the claims 9 to 14, **characterized in that** for consecutively impregnating the surfaces of the reinforcing fiber structure (1), a processing unit from a compounding device (5; 6), an impregnation tool (10;11) as well as an impregnation calender (12, 13) is provided in succession, respectively.

## Revendications

1. Procédé de production d'un pré-imprégné thermoplastique, dans lequel au moins une couche d'un plastique fondu (P₁ ; P₂) est appliquée sur une structure de fibres de renfort (1) solidifiée par calandrage, dans lequel le plastique (P₁ ; P₂) pénètre la structure de la fibre de renfort (1) dans au moins un processus d'imprégnation, dans lequel, au moins d'un côté, le plastique (P₁ ; P₂) fondu, mélangé, est appliqué à plat par vide (pᵥ) sur la structure de fibres de renfort (1) préchauffée à la température de traitement dans un outil d'imprégnation (2, 10, 11), **caractérisé en ce que** le produit pré-imprégné quitte l'outil d'imprégnation (2, 10, 11) et est transmis à une calandre d'imprégnation (8, 12, 13), qui possède trois cylindres de calandre (8.1, 8.2, 8.3; 12.1, 12.2, 12.3; 13.1, 13.2, 13.3) étant en contact les uns avec les autres et dans lesquels l'imprégnation est poursuivie.

2. Procédé selon la revendication 1, **caractérisé en ce que** les températures des cylindres (T_{W1}, T_{W2}, T_{W3}) de la calandre d'imprégnation (8, 12, 13) sont influencées en tant que paramètres de processus.

3. Procédé selon la revendication 1 ou 2, **caractérisé en ce que** les vitesses des cylindres (n₁, n₂, n₃) de la calandre d'imprégnation (8, 12, 13) sont influencées en tant que paramètres de processus.

4. Procédé selon au moins l'une quelconque des revendications précédentes, **caractérisé en ce qu'**après le passage d'une fente de laminage entre les cylindres de la calandre (8.1, 8.2 ; 12.1, 12,2 ; 13.1, 13.2), la structure de fibres de renfort (1) enduite du matériau plastique (P1 ; P2) est exposée à une nouvelle augmentation de température au moyen d'un projecteur (9).

5. Procédé selon au moins l'une quelconque des revendications précédentes, **caractérisé en ce qu'**une couche du même plastique (P₁) est appliquée sur les deux côtés de la structure de fibres de renfort (1) en une seule étape.

6. Procédé selon au moins l'une quelconque des revendications 1 à 4, **caractérisé en ce qu'**une couche respective de plastiques différents (P₁ ; P₂) est appliquée sur les deux côtés de la structure de fibres de renfort (1) en une seule étape.

7. Procédé selon au moins l'une quelconque des revendications 1 à 4, **caractérisé en ce que** chaque couche de plastique (P₁ ; P₂) est appliquée puis immédiatement imprégnée successivement d'abord d'un côté et puis de l'autre côté de la structure de fibres de renfort (1).

8. Procédé selon la revendication 7, **caractérisé en ce que** des couches de plastiques différents (P₁ ; P₂) sont appliquées sur les deux côtés de la structure de fibres de renfort (1).

9. Dispositif pour la production d'un pré-imprégné thermoplastique selon un procédé selon la revendication 1, avec un dispositif de chauffage pour préchauffer une structure de fibres de renfort (1), au moins un dispositif de mélange pour la modification et la fusion d'un plastique (P₁ ; P₂) et un dispositif de calandrage, dans lequel un outil d'imprégnation (2 ; 10 ; 11) sous vide (pᵥ) et stationnaire est disposé entre un dispositif de mélange (5 ; 6) pour le plastique (P₁ ; P₂) et le dispositif de calandrage, lequel est pourvu de moyens pour le transport à plat de la structure de fibres de renfort (1) à travers l'outil d'imprégnation (2; 10 ; 11) et est pourvu de moyens pour appliquer le plastique fondu (P₁ ; P₂) sur la structure de fibres de renfort (1), **caractérisé en ce que** le dispositif de calandrage est une calandre d'imprégnation (8, 12, 13) qui possède trois cylindres de calandre (8.1, 8.2, 8.3 ; 12.1, 12.2, 12.3 ; 13.1, 13.2, 13.3) en contact les uns avec les autres et qui est maintenue dans le procédé d'imprégnation.

10. Dispositif selon la revendication 9, **caractérisé en ce que** les températures des cylindres (T_{W1}, T_{W2}, T_{W3}) de la calandre d'imprégnation (8, 12, 13) sont influençables.

11. Dispositif selon la revendication 9 ou 10, **caractérisé en ce que** les vitesses des cylindres (n₁, n₂, n₃) de la calandre d'imprégnation (8, 12, 13) sont influençables.

12. Dispositif selon au moins l'une quelconque des revendications 9 à 11, **caractérisé en ce qu'**un projecteur (9) est prévu pour augmenter à nouveau la température de la structure de fibres de renfort (1) recouverte de plastique (P₁ ; P₂) dans la zone d'un cylindre de calandre central (8.2, 12.2, 13.2) de la calandre d'imprégnation (8, 12, 13).

13. Dispositif selon au moins l'une quelconque des revendications 9 à 12, **caractérisé en ce qu'**un dispositif de mélange (5 ; 6) servant au recouvrement des deux surfaces de la structure de fibres de renfort (1) est placé en amont de l'outil d'imprégnation (2).

14. Dispositif selon au moins l'une quelconque des revendications 9 à 12, **caractérisé en ce que** deux dispositifs de mélange (5 ; 6) servant au recouvrement des deux surfaces de la structure de fibres de renfort (1) sont placés en amont de l'outil d'imprégnation (2).

15. Dispositif selon au moins l'une quelconque des revendications 9 à 14, **caractérisé en ce qu'**une unité de traitement composée d'un dispositif de mélange (5 ; 6), d'un outil d'imprégnation (10 ; 11) ainsi que d'une calandre d'imprégnation (12 ; 13) est prévue pour l'imprégnation séquentielle des surfaces de la structure de fibres de renfort (1).
